# EUROPÄISCHE PATENTSCHRIFT

(11) **EP 4 029 076 B1**
(45) Veröffentlichungstag und Bekanntmachung des Hinweises auf die Patenterteilung: **25.06.2025**
(21) Anmeldenummer: 20768012.5
(22) Anmeldetag: 04.09.2020
(51) Int. Cl.: H01M 10/613, H01M 10/615, H01M 10/625, H01M 10/651, H01M 10/6568

(54) **VORRICHTUNG UND VERFAHREN ZUR TEMPERIERUNG EINES ENERGIESPEICHERS FÜR ELEKTRISCHE ENERGIE EINES KRAFTFAHRZEUGS**
DEVICE AND METHOD FOR MAINTAINING THE TEMPERATURE OF AN ENERGY STORAGE DEVICE FOR ELECTRICAL ENERGIE FOR A VEHICLE
DISPOSITIF ET PROCÉDÉ DE MAINTAINIR LA TEMPÉRATURE D'UN DISPOSITIF DE STOCKAGE D'ENERGIE POUR ENERGIE ÉLECTRIQUE POUR UN VÉHICULE

(30) Priorität: 12.09.2019 DE 102019006487
(43) Veröffentlichungstag der Anmeldung: 20.07.2022
(73) Patentinhaber: MAN Truck & Bus SE, 80995 München (DE)
(72) Erfinder: BRAUN, Reimar, 80995 München (DE)
(74) Vertreter: v. Bezold & Partner Patentanwälte - PartG mbB
(86) Internationale Anmeldenummer: PCT/EP2020/074741
(87) Internationale Veröffentlichungsnummer: WO 2021/048014

(56) Entgegenhaltungen:
- DE-A1- 102017 108 400
- DE-T5- 112012 001 739

## Beschreibung

Die Erfindung betrifft eine Vorrichtung und ein Verfahren zur Temperierung eines Energiespeichers für elektrische Energie eines Kraftfahrzeugs. Die Erfindung betrifft ferner ein Kraftfahrzeug, vorzugsweise ein Nutzfahrzeug, mit einer solchen Vorrichtung.

Kraftfahrzeuge, welche zumindest teilweise elektrisch antreibbar sind, verfügen in der Regel über einen Energiespeicher für elektrische Energie, nachfolgend auch kurz als elektrischer Energiespeicher bezeichnet. Der elektrische Energiespeicher kann hierbei eine Hochvolt (HV)-Kraftfahrzeugbatterie sein. Aus der Praxis sind verschiedene Verfahren bekannt, eine Hochvolt-Batterie nicht nur zu kühlen, sondern auch zu heizen. Eine Möglichkeit ist die Erwärmung von Wasser-Glykol mittels Heiz-/Kühlrippen im Boden der HV-Batterie. Andere Ansätze sind z. B. das Heizen der Zelle oder Generierung von Blindleistung, z. B. über den Ableiter. Kraftfahrzeuge sind aber oftmals nur zu einem Bruchteil der Zeit aktiv in Betrieb. Es besteht daher die Möglichkeit, dass der elektrische Energiespeicher, insbesondere die einzelnen Batteriezellen, bei abgestelltem Fahrzeug auskühlen. Es ist bekannt, dass zu hohe oder zu niedrige Temperaturen die Lebensdauer, Leistungsfähigkeit und Funktionsfähigkeit einer solchen Batterie nachteilig beeinflussen. Insbesondere ergibt sich das Problem, dass unterhalb einer kritischen Mindesttemperatur die Batteriezellen des Energiespeichers bei erneutem Start des Fahrzeugs nicht mehr in der Lage sind, ausreichend Leistung für den Startbetrieb bereitzustellen. Kühlt die HV-Batterie beispielsweise zu stark aus, so kann aus den Zellen nur ein geringer bzw. gar kein Strom aus der HV-Batterie, insbesondere auch für das Heizen, bereitgestellt werden, da die Stromgrenzen der Zellen vom Ladezustand (engl. SoC) und von der Temperatur abhängen. Bekannte Ansätze zum Heizen von HV-Batterien haben zudem den Nachteil, dass diese hierfür sehr viel Energie verbrauchen.

DE 11 2012 001739 offenbart eine Vorrichtung und ein Verfahren zur Temperierung eines Energiespeichers bei dem nur eine vorbestimmte Teilmenge des Temperierfluids durch eine Heizeinrichtung erwärmt wird.

Es ist somit eine Aufgabe der Erfindung, eine Vorrichtung zur Temperierung eines elektrischen Energiespeichers bereitzustellen, mit der Nachteile herkömmlicher Techniken vermieden werden können. Die Aufgabe der Erfindung ist es insbesondere, einen Ansatz zur Temperierung eines Energiespeichers bereitzustellen, mittels dessen ein Auskühlen des elektrischen Energiespeichers auch bei abgestelltem Fahrzeug vermieden werden kann und womit auch bei abgestelltem Fahrzeug ein möglichst energieeffizientes Heizen des elektrischen Energiespeichers ermöglicht wird.

Diese Aufgaben werden durch eine Vorrichtung und ein Verfahren mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten allgemeinen Gesichtspunkt der Erfindung wird eine Vorrichtung zur Temperierung eines Energiespeichers für elektrische Energie eines Kraftfahrzeugs bereitgestellt. Das Kraftfahrzeug kann ein elektrisch antreibbares und/oder angetriebenes Kraftfahrzeug sein. Die Vorrichtung umfasst einen Energiespeicher für elektrische Energie, nachfolgend auch als elektrischer Energiespeicher oder kurz als Energiespeicher bezeichnet.

Die Vorrichtung umfasst ferner einen mit dem Energiespeicher thermisch koppelbaren und/oder gekoppelten Fluidkreislauf zum Temperieren des Energiespeichers, wobei ein Temperierfluid durch den Fluidkreislauf zum Energiespeicher zu- und abführbar ist. Hierbei kann der Fluidkreislauf eine Pumpeneinrichtung zum Transport des Temperierfluids durch den Fluidkreislauf, eine Ventileinrichtung, eine Kühleinrichtung zur Kühlung des Temperierfluids und eine Heizeinrichtung zur Erwärmung des Temperierfluids umfassen. Der Fluidkreislauf umfasst ferner einen Teilkreislauf, in welchem die Heizeinrichtung angeordnet ist. Dieser Teilkreislauf wird nachfolgend auch als erster Teilkreislauf bezeichnet. Der Fluidkreislauf kann somit wahlweise als Kühlkreislauf und Heizkreislauf dienen.

Erfindungsgemäß ist die Vorrichtung ausgebildet, bei abgestelltem Kraftfahrzeug und bei Erfüllung einer vorbestimmten Heizbedingung einen Heizbetrieb der Heizeinrichtung zu aktivieren, wobei mittels der Ventileinrichtung eine fluidische Kopplung des Teilkreislaufs mit dem Fluidkreislauf und eine Zu- und Abfuhr von im Teilkreislauf erwärmtem Temperierfluid zum Energiespeicher für elektrische Energie steuerbar ist.

Hierdurch kann auch bei abgestelltem Kraftfahrzeug ein Auskühlen des Energiespeichers verhindert werden. Ferner ist ein besonders energieeffizientes Heizen des Temperierfluids und damit ein energieeffizientes Erwärmen des Energiespeichers möglich, da mittels der im Teilkreislauf angeordneten Heizeinrichtung nur eine Teilmenge des Temperierfluids erwärmt werden kann, die anschließend mittels der Ventileinrichtung gezielt dem Energiespeicher zur lokalen Wärmeabgabe zugeführt werden kann. Thermische Verluste können entsprechend reduziert werden. Gleichzeitig ist eine kostengünstige Realisierung der Vorrichtung möglich, da kein vom Kühlkreislauf separater Heizkreislauf vorgesehen ist, sondern letzterer in den Kühlkreislauf integriert ist.

Vorzugsweise soll unter einem abgestellten Fahrzeug ein abgestellter und/oder geparkter Zustand des Kraftfahrzeugs verstanden werden, insbesondere ein Ruhebetriebszustand des Kraftfahrzeugs, z. B. bei einem Parken des Kraftfahrzeugs.

Erfindungsgemäss wird hierbei im Heizbetrieb nur eine Teilmenge des Temperierfluids durch die Heizeinrichtung erwärmt. Gemäß der Erfindung ist die Vorrichtung hierbei ausgebildet, bei aktiviertem Heizbetrieb in einem ersten Schritt eine Teilmenge, vorzugsweise eine vorbestimmte Teilmenge, des Temperierfluids im Teilkreislauf durch die Heizeinrichtung zu erwärmen, wobei der Teilkreislauf mittels der Ventileinrichtung fluidisch von dem restlichen Fluidkreislauf und/oder dem Energiespeicher getrennt ist. Die Vorrichtung ist gemäß der Erfindung ferner ausgebildet, in einem zweiten Schritt den Teilkreislauf mittels der Ventileinrichtung fluidisch mit dem Energiespeicher zu verbinden und mittels der Pumpeneinrichtung die erwärmte vorbestimmte Teilmenge zum Energiespeicher zu pumpen.

Hierbei kann im ersten Schritt und/oder im zweiten Schritt ein weiterer, zweiter Teilkreislauf, in dem die Kühleinrichtung angeordnet ist, vom restlichen Fluidkreislauf, der den ersten Teilkreislauf und den Abschnitt mit dem Energiespeicher umfasst, fluidisch getrennt sein. Die vorbestimmte Teilmenge des Temperierfluids kann durch die Größe und/oder Fluidaufnahmekapazität des ersten Teilkreislaufs und/oder durch die Position einzelner Ventile der Ventileinrichtung zur fluidischen Kopplung des ersten Teilkreislaufs mit dem Fluidkreislauf festgelegt sein. Dies ermöglicht ein besonders energieeffizientes Heizen des Energiespeichers, denn es kann einerseits vermieden werden, dass die gesamte Menge an Temperierfluid im Fluidkreislauf im Heizbetrieb erwärmt und hierfür Energie aufgewendet wird. Thermische Verluste aufgrund der thermischen Kapazität des Fluidkreislaufs können somit reduziert werden. Dies ist besonders vorteilhaft, wenn ein abgestelltes Fahrzeug nicht an eine externe Stromversorgung oder Ladestation angeschlossen ist und die Energie des Energiespeichers beispielsweise von diesem selbst oder einer anderen Fahrzeugbatterie bereitgestellt wird. Entsprechend kann durch den geringeren Energieverbrauch ein zu schnelles Entladen des Energiespeichers durch den Heizbetrieb vermieden werden. Ferner kann eine Teilmenge von Temperierfluid schneller erwärmt werden als die Gesamtmenge, so dass der Heizprozess insgesamt schneller ist.

Bei einer vorteilhaften Variante dieser Ausführungsform kann die Vorrichtung ausgebildet sein, bei aktiviertem Heizbetrieb mehrere Sequenzen zum Erwärmen des Energiespeichers durchzuführen, wobei jede Sequenz den ersten und zweiten Schritt umfasst, vorzugsweise derart, dass sequentielle Impulse von erwärmten Teilmengen des Temperierfluids anstatt eines kontinuierlichen Stroms von Temperierfluid zum Energiespeicher gepumpt wird. Mit anderen Worten werden mehrere Sequenzen mit erwärmtem Temperierfluid nacheinander und/oder gepulst in den Energiespeicher gepumpt. Dadurch kann die benötigte Menge an erwärmtem Temperierfluid genauer festgelegt und/oder die benötigte Menge an Temperierfluid, die erforderlich ist, um den Energiespeicher vor zu starker Abkühlung zu bewahren, reduziert werden.

Erfindungsgemäss kann in einer ersten Alternative die Vorrichtung hierzu ausgebildet sein, im zweiten Schritt die Ventileinrichtung und die Pumpeneinrichtung derart anzusteuern, dass die erwärmte vorbestimmte Teilmenge in den Durchströmungsbereich des Energiespeichers gepumpt wird und dort durch Anhalten des Fluidstroms eine Mindestzeitdauer verbleibt. Hierdurch wird eine besonders effiziente thermische Kopplung mit dem Energiespeicher erreicht, da ein Großteil der Wärme des erwärmten Temperierfluids gezielt an den Energiespeicher und nur zu einem geringeren Anteil an andere Leitungssegmente abgegeben werden kann. Ferner ist ein sequenzieller Pumpbetrieb verbrauchsärmer als ein kontinuierlicher Betrieb des Temperierfluids.

Ferner kann der Energiespeicher über einen in einem Wandungsbereich, vorzugsweise in einer Bodenplatte, des Energiespeichers ausgebildeten Durchströmungsbereich mit dem Fluidkreislauf thermisch gekoppelt sein. Hierbei kann optional ferner die vorbestimmte Teilmenge des Temperierfluids, die im ersten Schritt erwärmt wird, einer Aufnahmekapazität des Durchströmungsbereichs des Energiespeichers entsprechen. Mit anderen Worten wird im Heizbetrieb nur so viel Fluid erwärmt, wie der Wandungsbereich und/oder die Bodenplatte des Energiespeichers an Temperierfluid zur thermischen Kopplung aufnehmen kann. Durch diese Variante kann die Energie, die für den Heizbetrieb benötigt wird, besonders effizient reduziert werden und eine besonders energieeffiziente Erwärmung des Energiespeichers ermöglicht werden. Der Fluidkreislauf kann somit einerseits wahlweise als Kühlkreislauf (im Kühlbetrieb) und Heizkreislauf (im Heizbetrieb) verwendet werden, jedoch werden insbesondere im Heizbetrieb die thermischen Verluste aufgrund der thermischen Kapazität des Fluidskreislaufs reduziert, da nur die thermische Kapazität des Teilkreislaufs und/oder die darin erwärmte Teilmenge an Temperierfluid im Heizbetrieb genutzt wird. Die Vorrichtung ist vorzugsweise ferner ausgebildet, dass eine Richtung des Fluidmassenstromes im Kühlbetrieb die gleiche ist wie im Heizbetrieb.

Gemäss einer zweiten Alternative der Erfindung kann die vorbestimmte Teilmenge des Temperierfluids, die im ersten Schritt erwärmt wird, im Bereich von 80 % - 200 %, weiter vorzugsweise 90 % - 130 %, der Aufnahmekapazität des Durchströmungsbereichs liegen. Praxistests haben gezeigt, dass mit diesen Bereichen ebenfalls gute Ergebnisse erzielt werden können. Es ist somit vorteilhaft, wenn das Temperierfluid nicht über die ganze Länge der Verrohrung des Fluidkreislaufs erwärmt wird, sondern nur eine Teilmenge hiervon.

Der Begriff "Teilkreislauf" ist in diesem Zusammenhang derart zu verstehen, dass der Fluidkreislauf ein Teilsegment aufweist, in dem lediglich eine Teilmenge des Temperierfluids des Fluidkreislaufs zirkulieren kann und/oder mittels der Heizeinrichtung erwärmt werden kann. Gemäß einer Ausführungsform kann der Teilkreislauf eine Aufnahmekapazität für Temperierfluid aufweisen, die kleiner als 50 %, weiter vorzugsweise kleiner als 30 % oder kleiner als 20 %, der Aufnahmekapazität des gesamten Fluidkreislaufs ist. Dies bietet den Vorzug, dass für den Heizbetrieb bei abgestelltem Fahrzeug eine relativ kleine Menge an Temperierfluid erwärmt werden kann, um so den Energieaufwand zum Heizen möglichst gering zu halten, während im Kühlbetrieb vorzugsweise die gesamte Menge an Temperierfluid zur Verfügung steht, um insbesondere im Fahrbetrieb des Fahrzeugs ein Überhitzen des Energiespeichers sicher vermeiden zu können.

Gemäß einem weiteren Aspekt kann die Vorrichtung zur Temperierung des Energiespeichers ein elektrisches Teilbordnetz des Kraftfahrzeugs umfassen, das bei ausgeschalteter Zündung und/oder gezogenem Batteriehauptschalter des Kraftfahrzeugs mit elektrischer Spannung versorgt wird und/oder versorgbar ist. Auf diese Weise muss bei abgestelltem Fahrzeug nicht das ganze Fahrzeugbordnetz mit Strom versorgt werden, sondern nur ein elektrisches Teilbordnetz, welches die Heizeinrichtung für den Heizbetrieb und optional weitere Komponenten, wie beispielsweise Sensoreinrichtungen zur Überwachung der vorbestimmten Heizbedingung, beispielsweise der Energiespeichertemperatur, mit elektrischer Energie versorgt. Ein solcher Teilnetzbetrieb ist besonders vorteilhaft für Lastkraftwagen (LKW), wo es heute gängige Praxis ist, dass LKW-Fahrer bei ihren Fahrzeugen beim Parken oder Abstellen des Fahrzeugs über Nacht oder über das Wochenende den Batteriehauptschalter (der 24V-Starterbatterie) ziehen und somit Funktionen des Bordnetzes deaktivieren. Eine Ausführungsform der Erfindung sieht entsprechend vor, dass selbst bei abgestelltem Fahrzeug und/oder gezogenem BatterieHauptschalter das Teilbordnetz, in dem die Heizeinrichtung für den Energiespeicher angeordnet ist, dennoch mit Strom versorgt werden kann.

Die Versorgung mit elektrischer Energie kann hierbei über den Energiespeicher selbst erfolgen, wobei die Heizeinrichtung eine elektrisch betriebene Heizeinrichtung ist, die in dem Teilbordnetz angeordnet ist. Alternativ oder zusätzlich kann der Energiespeicher auch über eine andere Batterie des Kraftfahrzeugs mit elektrischer Energie versorgt werden und/oder über eine externe Stromversorgung, falls das abgestellte Fahrzeug beispielsweise an einer Ladestation geparkt ist.

Gemäß einem weiteren Aspekt kann der Fluidkreislauf zwei parallel geschaltete Leitungen aufweisen, in denen die Heizeinrichtung und die Kühleinrichtung fluidisch parallel zueinander angeordnet sind, wobei mittels der Ventileinrichtung steuerbar ist, über welche der parallel geschalteten Leitungen ein Fluidstrom dem Energiespeicher zuführbar ist und/oder zugeführt wird. Dies bietet den Vorteil, dass die Fluidströme für den Heizbetrieb und für den Kühlbetrieb der Vorrichtung entsprechend angepasst gesteuert werden können.

Beispielsweise kann die Vorrichtung ausgebildet sein, im vorstehend beschriebenen zweiten Schritt mittels der Ventileinrichtung einen die Kühleinrichtung aufweisenden Leitungsabschnitt fluidisch von einem den Energiespeicher aufweisenden Leitungsabschnitt zu entkoppeln, so dass erwärmtes Temperierfluid direkt zum Energiespeicher gefördert wird und nicht zur Kühleinrichtung.

Unter einer vorbestimmten Heizbedingung wird eine vorab festgelegte Bedingung oder ein vorab festgelegtes Kriterium verstanden, die oder das angibt oder aus der ableitbar ist, wann, insbesondere bei abgestelltem Fahrzeug, der Energiespeicher zu stark auszukühlen droht und eine ordnungsgemäße Funktionsweise nicht mehr gewährleistet werden kann und/oder zu starke Alterungseffekte des Energiespeichers zur Folge hätte. Die vorbestimmte Heizbedingung kann beispielsweise erfüllt sein, falls eine Temperatur des Energiespeichers einen vorbestimmten Schwellenwert unterschreitet. Ein geeigneter Schwellenwert für den jeweiligen Energiespeicher kann experimentell ermittelt und festgelegt werden. Hierzu kann die Vorrichtung eine Sensoreinrichtung, beispielsweise mindestens einen Temperatursensor, aufweisen, der die Energiespeichertemperatur und/oder die Temperatur einer oder mehrerer Speicherzellen des Energiespeichers überwacht. Anstatt der Energiespeichertemperatur kann alternativ oder zusätzlich auch eine andere Größe im Rahmen der Überwachung der Heizbedingung überwacht werden, beispielsweise die Umgebungstemperatur und oder die Temperatur des Temperierfluids des Fluidkreislaufs. Aus dem Verlauf dieser Größen ist die Temperatur des Energiespeichers, z. B. mittels einer vorab experimentell bestimmten Kennlinie, ebenfalls abschätzbar.

Gemäß einem weiteren Aspekt kann die Pumpeneinrichtung eine im Teilkreislauf angeordnete erste Pumpe zur Förderung des Temperierfluids innerhalb des Teilkreislaufs umfassen. Alternativ oder zusätzlich kann die Pumpeneinrichtung eine außerhalb des Teilkreislaufs angeordnete zweite Pumpe zur Förderung von Temperierfluid zum Energiespeicher umfassen.

Gemäß einem weiteren Aspekt kann die Vorrichtung ausgebildet sein, nach einer Deaktivierung der Heizeinrichtung die erste Pumpe, wie vorstehend beschrieben, zur Vermeidung von Kavitationseffekten erst nach einer Nachlaufzeit zu deaktivieren. Durch einen derartigen Nachlaufbetrieb werden störende Kavitationseffekte im Heizbetrieb vermieden oder zumindest reduziert.

Die Vorrichtung kann ferner eine Steuereinrichtung aufweisen, die ausgebildet ist, die Komponenten des Fluidkreislaufs, insbesondere die Heizeinrichtung, die Kühleinrichtung und/oder die Ventileinrichtung, anzusteuern.

Insofern vorstehend ausgeführt wurde, dass die Vorrichtung ausgebildet ist, eine oder mehrere Komponenten des Fluidkreislaufs zur Realisierung des Heizbetriebs anzusteuern, kann dies beispielsweise durch entsprechende Ausbildung der Steuereinrichtung erfolgen. Die Steuereinrichtung kann eine oder mehrere Steuergeräte umfassen oder programmtechnisch als Teil derartiger Steuergeräte implementiert sein. Ein Teil der Funktionalität der Steuereinrichtung kann beispielsweise auch im Batteriemanagementsystem (BMS) implementiert sein, z. B., um die Temperatur des Energiespeichers zu überwachen.

Gemäß einer weiteren Ausführungsform kann am oder angrenzend an die Heizeinrichtung eine thermische Isolierung vorgesehen sein. Hierdurch können Wärmeabstrahlverluste reduziert und die Energieeffizienz beim Heizen verbessert werden.

Das Temperierfluid kann in an sich bekannter Weise ein Glykol-Wasser-Gemisch sein.

Der elektrische Energiespeicher kann eine Hochvolt-Batterie, ein elektrischer Traktionsenergiespeicher und/oder ein Lithium-Ionen-Akkumulator-Energiespeicher sein.

Die Erfindung betrifft ferner ein Kraftfahrzeug mit einer Vorrichtung zur Temperierung eines Energiespeichers wie in diesem Dokument offenbart. Das Kraftfahrzeug kann ein elektrisch antreibbares und/oder angetriebenes Kraftfahrzeug sein. Das Kraftfahrzeug kann ein Nutzfahrzeug sein, wie beispielsweise ein Lastkraftwagen oder Omnibus.

Gemäß einem zweiten allgemeinen Gesichtspunkt der Erfindung wird ein Verfahren zur Temperierung eines Energiespeichers für elektrische Energie eines Kraftfahrzeugs bereitgestellt, wobei der Energiespeicher mit einem Fluidkreislauf zum Temperieren des Energiespeichers thermisch koppelbar ist und/oder gekoppelt ist und wobei ein Temperierfluid durch den Fluidkreislauf zum Energiespeicher zu- und abführbar ist. Der Fluidkreislauf umfasst eine Pumpeneinrichtung zum Transport des Temperierfluids durch den Fluidkreislauf, eine Ventileinrichtung, eine Kühleinrichtung zur Kühlung des Temperierfluids und eine Heizeinrichtung zur Erwärmung des Temperierfluids. Der Fluidkreislauf weist einen Teilkreislauf auf, in welchem die Heizeinrichtung angeordnet ist.

Das Verfahren umfasst das Überwachen einer vorbestimmten Heizbedingung bei abgestelltem Kraftfahrzeug und bei Erfüllung einer vorbestimmten Heizbedingung das Aktivieren eines Heizbetriebs der Heizeinrichtung, wobei mittels der Ventileinrichtung eine fluidische Kopplung des Teilkreislaufs mit dem Fluidkreislauf und eine Zu- und Abfuhr von im Teilkreislauf erwärmtem Temperierfluid zum Energiespeicher für elektrische Energie gesteuert wird.

Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale, insbesondere im Hinblick auf die Ausbildung der Vorrichtung, des Fluidkreislaufs und der funktionalen Ausführung der Vorrichtung gelten somit auch für das Verfahren.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine stark schematisierte Ansicht einer Vorrichtung zur Temperierung eines Energiespeichers in einem ersten Schritt des Heizbetriebs gemäß einer Ausführungsform der Erfindung;
- Figur 2: die Vorrichtung aus Figur 1 in einem zweiten Schritt des Heizbetriebs gemäß einer Ausführungsform der Erfindung; und
- Figur 3: ein Ablaufdiagramm zur Illustration der Funktionsweise der Temperiervorrichtung und eines Verfahrens zur Temperierung des Energiespeichers gemäß einer Ausführungsform der Erfindung.

Gleiche oder äquivalente Elemente sind in allen Figuren mit denselben Bezugszeichen bezeichnet und zum Teil nicht gesondert beschrieben.

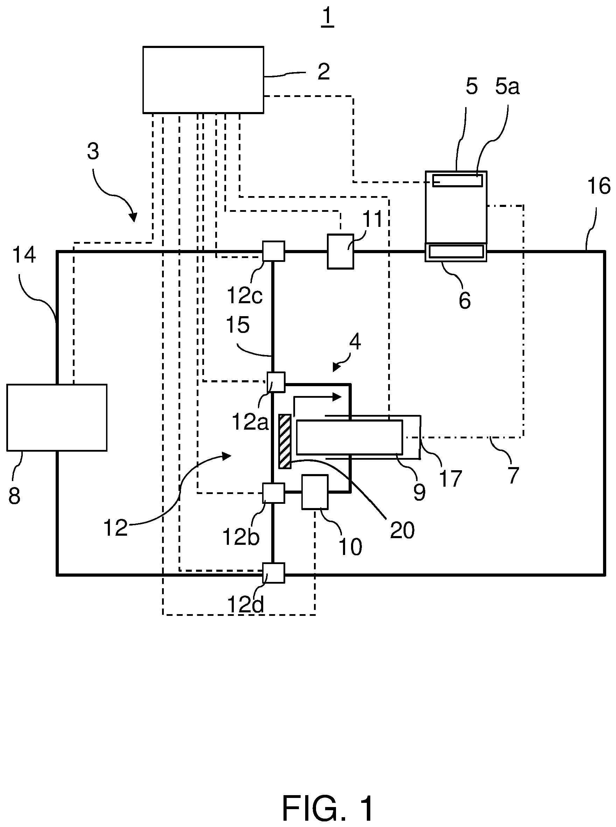

Figur 1 zeigt eine Vorrichtung 1 zur Temperierung eines Energiespeichers 5 für elektrische Energie eines Kraftfahrzeugs gemäß einer Ausführungsform der Erfindung. Das Kraftfahrzeug kann ein elektrisch angetriebenes Kraftfahrzeug sein, beispielsweise ein LKW. Der Energiespeicher 5 ist ein HV-Energiespeicher und versorgt eine elektrische Maschine (nicht dargestellt) des Kraftfahrzeugs mit elektrischer Traktionsenergie und nimmt rekuperierte Energie wieder auf.

Die Vorrichtung 1 umfasst ferner einen mit dem Energiespeicher 5 thermisch gekoppelten Fluidkreislauf 3 zum Temperieren des Energiespeichers 5, wobei ein Temperierfluid, z. B. Wasser-Glykol, durch den Fluidkreislauf zum Energiespeicher 5 zu- und abführbar ist. Hierzu ist im Bodenbereich des Energiespeichers ein Durchströmungsbereich 6 vorgesehen, durch den das Temperierfluid strömen kann. Im Durchströmungsbereich kann das Temperierfluid wahlweise als Heiz- oder Kühlrippen dienende Rippen umströmen, um eine thermische Kopplung mit dem Energiespeicher 5 zu erzielen.

Der Fluidkreislauf 3 umfasst eine Pumpeneinrichtung, die vorliegend eine erste Pumpe 10 und eine zweite Pumpe 11 zum Transport des Temperierfluids durch den Fluidkreislauf 3 umfasst. Der Fluidkreislauf 3 umfasst ferner eine Ventileinrichtung 12, die vorliegend mehrere Magnetventile 12a bis 12d umfasst.

Im Leitungsabschnitt 14 ist eine Kühleinrichtung 8 zur Kühlung des Temperierfluids angeordnet. Die Kühleinrichtung 8 kann in an sich bekannter Weise ausgeführt sein und ist daher hier nicht näher beschrieben. Im Kühlbetrieb kühlt die Kühleinrichtung 8 das sie durchströmende Temperierfluid.

Im einem zum Leitungsabschnitt 14 parallelen Leitungsabschnitt 15 ist hier eine Heizeinrichtung 9 zur Erwärmung des Temperierfluids angeordnet. Die Heizeinrichtung 9 ist in einem fluidischen Teilkreislauf 4 angeordnet, in welchem auch die erste Pumpe 10 angeordnet ist. Die Heizeinrichtung ist zumindest teilweise von einer thermischen Isolierung 17 ummantelt, was in Figur 1 lediglich stark schematisiert dargestellt ist.

Ferner umfasst die Vorrichtung 1 eine Steuereinrichtung 2, die über Signalleitungen, die gestrichelt dargestellt sind, mit den einzelnen Komponenten des Fluidkreislaufs 3 signaltechnisch verbunden sind. Die Steuereinrichtung 2 ist eingerichtet, die einzelnen Komponenten des Fluidkreislaufs 3 anzusteuern. Ein Teil der Funktionalität der Steuereinrichtung 2 ist auch im Batteriemanagementsystem (BMS) 5a des Energiespeichers implementiert, wobei das BMS verwendet wird, die Temperatur des Energiespeichers 5 zu überwachen.

Die Heizeinrichtung 9 ist als elektrischer Hochvolt (HV)-Heizer ausgeführt, der über ein elektrisches Teilbordnetz 7, hier lediglich stark schematisiert durch die strichgepunktete Linie dargestellt, mit elektrischer Energie aus dem Energiespeicher 6 versorgt wird. Die Besonderheit liegt hier darin, dass dieses Teilbordnetz 7 auch bei abgestelltem Fahrzeug und gezogenem Zündschlüssel mit Strom versorgt wird, während andere Teile des Bordnetzes deaktiviert sind. Über dieses Teilbordnetz 7 werden die Steuereinrichtung 2 und der Energiespeicher 9 auch bei abgestelltem Fahrzeug mit elektrischer Energie versorgt. Ferner wird eine elektrische Ansteuerung der magnetischen Ventileinrichtung 12 ermöglicht.

Der Fluidkreislauf 3 kann wahlweise sowohl zum Kühlen des Energiespeichers 6 als auch zum Erwärmen des Energiespeichers 6 verwendet werden, je nachdem, ob über die Kühleinrichtung 8 gekühltes Temperierfluid zum Energiespeicher 6 oder durch die Heizeinrichtung 9 erwärmtes Temperierfluid zum Energiespeicher 6 gefördert wird. Die Umlaufrichtung des Massenstroms ist im Heiz- und Kühlbetrieb die gleiche.

Im normalen Fahrbetrieb des Kraftfahrzeugs muss der Energiespeicher 6 in der Regel gekühlt werden, sodass im Fahrbetrieb normalerweise der Teilkreislauf 4 vom restlichen Fluidkreislauf 3 mittels der Ventileinrichtung 12 fluidisch entkoppelt ist. Hierzu können die Ventile 12c und 12d von der Steuereinrichtung 12 so geschaltet werden, dass die Fluidleitung 14 mit der Fluidleitung 16 fluidisch verbunden ist und die Fluidleitung 15 mit den Fluidleitungen 14 und 16 fluidisch nicht verbunden ist. Von der Kühleinrichtung 8 gekühltes Temperierfluid fließt somit durch einen von den Leitungen 14 und 16 gebildeten Fluidkreislauf in den Durchströmungsbereich 6 des Energiespeichers 5 und wieder zurück zur Kühleinrichtung.

Vorstehend wurde jedoch bereits erwähnt, dass im Nicht-Fahrbetrieb bei abgestelltem Fahrzeug und kalten Außentemperaturen das Problem auftreten kann, dass der Energiespeicher 6 zu stark auskühlt. Dies kann die Lebensdauer, Leistungsfähigkeit und Funktionsfähigkeit des Energiespeichers nachteilig beeinflussen und dazu führen, dass bei erneutem Start des Fahrzeugs der Energiespeicher nicht mehr in der Lage ist, ausreichend Leistung für den Startbetrieb bereitzustellen.

Entsprechend wird die Temperiervorrichtung 1 bei Bedarf auch zum Heizen des Energiespeichers 5 bei abgestelltem Fahrzeug verwendet, was nachfolgend erläutert ist.

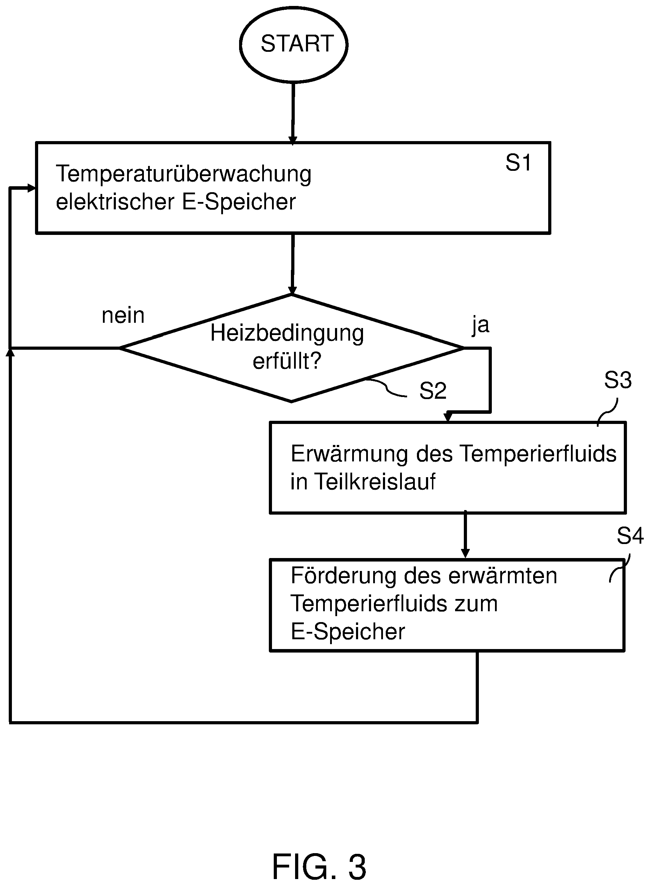

Hierzu ist die Steuereinrichtung 2 ausgebildet, bei abgestelltem Fahrzeug zu überwachen, ob eine vorbestimmte Heizbedingung erfüllt ist. Beispielhaft wird hierbei die Temperatur des Energiespeichers 6 überwacht, wobei diese Temperaturüberwachung von dem Batteriemanagementsystem (BMS) 5a des Energiespeichers 5 durchgeführt wird, welches ohnehin auch im Fahrbetrieb die Temperatur des Energiespeichers mittels Temperatursensoren im Energiespeicher 5 überwacht. Das BMS kann dabei auf die sog. Zellmodulsteuerung (engl. Cell-Module-Controller (CMC)) zum Überwachen der Spannung zurückgreifen und auf den in jedem Zellmodul verbauten Temperatursensor. Diese Temperaturüberwachung bei abgestelltem Fahrzeug entspricht Schritt S1 entsprechend dem Ablaufdiagramm aus Figur 3.

Zu einer bestimmten Zeit t misst das BMS die Temperatur. Fällt die Temperatur unter eine bestimmte Grenze, gilt dies als Erfüllung der Heizbedingung, und die Steuereinrichtung 2 steuert den Teilkreis 4 und die Heizeinrichtung 9 zum Starten eines Heizbetriebs an. Dies ist als Schritt S2 in Figur 3 dargestellt.

Zum Starten des Heizbetriebs steuert die Steuereinrichtung 2 in einem ersten Schritt S3 zunächst die Ventile 12a und 12b so an, dass Fluid im Teilkreis 4 zirkulieren kann, diesen aber nicht verlassen kann, und aktiviert die Pumpe 10 sowie die Heizeinrichtung 9 im Teilkreis 4. Im Teilkreis 4 zirkuliert somit eine kleine Teilmenge 20 des Temperierfluids und wird dabei von der Heizeinrichtung 9 erwärmt. Der Teilkreis 4 ist so ausgelegt, dass die Teilmenge 20 ungefähr der Fluidmenge entspricht, die der Energiespeicher 6 in seiner Bodenplatte im Durchströmungsbereich aufnehmen kann.

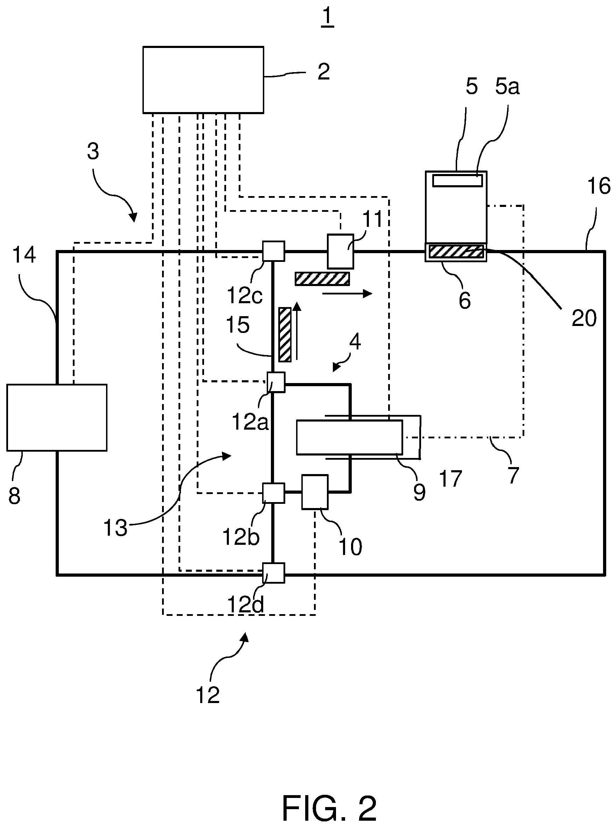

In der Heizeinrichtung 9 wird die Temperatur des sich erwärmenden Temperierfluids gemessen. Hat das Temperierfluid im Teilkreis 4 eine bestimmte Temperatur erreicht, steuert die Steuereinrichtung in einem zweiten Schritt S4 die Pumpen 10 und 11 und die Ventile 12a bis 12d so an, dass die Teilmenge 20 des erwärmten Temperierfluids 20 aus dem Teilkreis zum Durchströmbereich 6 des Energiespeichers gefördert wird. Diese Förderung der erwärmten Teilmenge 20 des Temperierfluids ist in Figur 2 schematisch durch die Pfeile und den sich bewegenden Kasten 20 illustriert.

Hierbei werden die Ventile 12c und 12d so geschaltet, dass die Fluidleitungen 15 und 16 miteinander fluidisch verbunden werden. Mit anderen Worten werden im zweiten Schritt S4 hierbei die Ventileinrichtung 12 und die Pumpen 10, 11 derart angesteuert, dass die erwärmte Teilmenge 20 des Temperierfluids in den Durchströmungsbereich 9 gepumpt wird und dort durch Anhalten des Fluidstroms eine Mindestzeitdauer verbleibt, um die Wärme an den Energiespeicher 6 abzugeben.

Hierbei werden bei aktiviertem Heizbetrieb mehrere derartige Sequenzen zum Erwärmen des Energiespeichers 9 durchgeführt, wobei jede Sequenz den ersten (S3) und zweiten (S4) Schritt umfasst, so dass sequentielle Impulse von erwärmten Teilmengen 20 des Temperierfluids anstatt eines kontinuierlichen Temperierfluidstroms zum Energiespeicher 9 gepumpt werden.

Dies wird so oft wiederholt, bis die Temperatur der Zell-Module oberhalb einer bestimmten Temperatur liegt. Anschließend wird der Heizbetrieb beendet und die Heizeinrichtung 9 deaktiviert. Zur Vermeidung von Kavitationseffekten wird die Pumpe 10 erst nach einer gewissen Nachlaufzeit deaktiviert.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Lediglich beispielhaft sei erwähnt, dass die beschriebene Ausgestaltung des Fluidkreises 3 und insbesondere der Ventileinrichtung 12 lediglich beispielhaft ist und selbstverständlich mehr oder weniger Ventile in unterschiedlichen Ausführungen und Verschaltungen verwendet werden können. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Temperiervorrichtung
- 2: Steuereinrichtung
- 3: Fluidkreislauf
- 4: Teilkreislauf
- 5: Elektrische Energiespeicher
- 5a: Batteriemanagementsystem (BMS)
- 6: Durchströmungsbereich
- 7: Teilbordnetz
- 8: Kühleinrichtung
- 9: Heizeinrichtung
- 10: Erste Pumpe
- 11: Zweite Pumpe
- 12: Ventileinrichtung
- 12a, 12b, 12c, 12d: Ventile
- 14: Fluidleitung
- 15: Fluidleitung
- 16: Fluidleitung
- 17: Thermische Isolierung
- 20: Teilmenge des Temperierfluids

## Patentansprüche

1. Vorrichtung (1) zur Temperierung eines Energiespeichers (5) für elektrische Energie eines Kraftfahrzeugs, umfassend
einen Energiespeicher (5) für elektrische Energie, vorzugsweise eine Hochvolt-Batterie;
einen mit dem Energiespeicher (5) thermisch koppelbaren und/oder gekoppelten Fluidkreislauf (3) zum Temperieren des Energiespeichers (5), wobei ein Temperierfluid durch den Fluidkreislauf zum Energiespeicher (5) zu- und abführbar ist;
wobei der Fluidkreislauf (3) eine Pumpeneinrichtung (10,11) zum Transport des Temperierfluids durch den Fluidkreislauf (3), eine Ventileinrichtung (12), eine Kühleinrichtung (8) zur Kühlung des Temperierfluids und eine Heizeinrichtung (9) zur Erwärmung des Temperierfluids umfasst, wobei der Fluidkreislauf (3) einen Teilkreislauf (4) aufweist, in welchem die Heizeinrichtung (9) angeordnet ist;
wobei die Vorrichtung (1) ausgebildet ist, bei abgestelltem Kraftfahrzeug und bei Erfüllung einer vorbestimmten Heizbedingung einen Heizbetrieb der Heizeinrichtung (9) zu aktivieren, wobei mittels der Ventileinrichtung (12) eine fluidische Kopplung des Teilkreislaufs mit dem Fluidkreislauf und eine Zu- und Abfuhr von im Teilkreislauf erwärmten Temperierfluid zum Energiespeicher (5) für elektrische Energie steuerbar ist;
wobei die Vorrichtung (1) ausgebildet ist, bei aktiviertem Heizbetrieb
in einem ersten Schritt (S3) eine vorbestimmte Teilmenge (20) des Temperierfluids im Teilkreislauf (4) durch die Heizeinrichtung (9) zu erwärmen, wobei der Teilkreislauf (4) mittels der Ventileinrichtung (12) fluidisch von dem restlichen Fluidkreislauf (3) und/oder dem Energiespeicher (5) getrennt ist und in einem zweiten Schritt (S4) den Teilkreislauf (4) mittels der Ventileinrichtung (12) fluidisch mit dem Energiespeicher (5) zu verbinden und mittels der Pumpeneinrichtung (10, 11) die erwärmte vorbestimmte Teilmenge (20) zum Energiespeicher zu pumpen;
wobei
a) der Energiespeicher (5) über einen in einem Wandungsbereich, vorzugsweise in einer Bodenplatte, des Energiespeichers (5) ausgebildeten Durchströmungsbereich (6) mit dem Fluidkreislauf (3) thermisch gekoppelt ist, wobei die vorbestimmte Teilmenge (20) des Temperierfluids, die im ersten Schritt erwärmt wird, einer Aufnahmekapazität des Durchströmungsbereichs (6) des Energiespeichers entspricht, oder im Bereich von 80 % - 200 %, weiter vorzugsweise 90 % - 130 % der Aufnahmekapazität des Durchströmungsbereichs (6) liegt; und/oder
b) die Vorrichtung ausgebildet ist, im zweiten Schritt (S4) die Ventileinrichtung (12) und die Pumpeneinrichtung (10, 11) derart anzusteuern, dass die erwärmte vorbestimmte Teilmenge (20) in den Durchströmungsbereich (9) gepumpt wird und dort durch Anhalten des Fluidstroms eine Mindestzeitdauer verbleibt.

2. Vorrichtung (1) nach Anspruch 1, wobei die Vorrichtung ausgebildet ist, bei aktiviertem Heizbetrieb mehrere Sequenzen zum Erwärmen des Energiespeichers (9) durchzuführen, wobei jede Sequenz den ersten (S3) und zweiten (S4) Schritt umfasst, vorzugsweise derart, dass sequentielle Impulse von erwärmten Teilmengen (20) des Temperierfluids anstatt eines kontinuierlichen Temperierfluidstroms zum Energiespeicher (9) gepumpt werden.

3. Vorrichtung nach einem der vorhergehenden Ansprüche, wobei der Teilkreislauf (4) eine Aufnahmekapazität für Temperierfluid aufweist, die kleiner als 50 %, weiter vorzugsweise kleiner als 30 % oder kleiner als 20 % der Aufnahmekapazität des Fluidkreislaufs (3) ist.

4. Vorrichtung (1) nach einem der vorhergehenden Ansprüche, umfassend ein elektrisches Teilbordnetz (7) des Kraftfahrzeugs, das bei ausgeschalteter Zündung und/oder gezogenem Batteriehauptschalter des Kraftfahrzeugs mit elektrischer Spannung versorgt wird und/oder versorgbar ist, vorzugsweise über den Energiespeicher (6), wobei die Heizeinrichtung (9) eine elektrisch betriebene Heizeinrichtung ist, die in dem Teilbordnetz (7) angeordnet ist.

5. Vorrichtung (1) nach einem der vorhergehenden Ansprüche, wobei der Fluidkreislauf (3) zwei parallel geschaltete Leitungen (14, 15) aufweist, in denen die Heizeinrichtung (9) und die Kühleinrichtung (8) fluidisch parallel zueinander angeordnet sind, wobei mittels der Ventileinrichtung (12) steuerbar ist, über welche der parallel geschalteten Leitungen (14, 15) ein Fluidstrom dem Energiespeicher (9) zuführbar ist und/oder zugeführt wird.

6. Vorrichtung (1) nach Anspruch 5, wobei die Vorrichtung (1) ausgebildet ist, im zweiten Schritt (S4) mittels der Ventileinrichtung (12) einen die Kühleinrichtung (8) aufweisenden Leitungsabschnitt (14) fluidisch von einem den Energiespeicher (6) aufweisenden Leitungsabschnitt (16) zu entkoppeln.

7. Vorrichtung (1) nach einem der vorhergehenden Ansprüche, wobei die vorbestimmte Heizbedingung erfüllt ist, falls eine Temperatur des Energiespeichers einen vorbestimmten Schwellenwert unterschreitet.

8. Vorrichtung (1) nach einem der vorhergehenden Ansprüche, wobei die Pumpeneinrichtung (10,11) eine im Teilkreislauf angeordnete erste Pumpe (10) umfasst zur Förderung des Temperierfluids innerhalb des Teilkreislaufs (4) und/oder eine außerhalb des Teilkreislaufs angeordnete zweite Pumpe (11) zur Förderung von Temperierfluid zum Energiespeicher (9).

9. Vorrichtung (1) nach Anspruch 8, wobei die Vorrichtung ausgebildet ist, nach einer Deaktivierung der Heizeinrichtung die erste Pumpe (10) zur Vermeidung von Kavitationseffekten erst nach einer Nachlaufzeit zu deaktivieren.

10. Vorrichtung (1) nach einem der vorhergehenden Ansprüche,
a) wobei am oder angrenzend an die Heizeinrichtung eine thermische Isolierung (17) vorgesehen ist; und/oder
b) wobei das Temperierfluid ein Glykol-Wasser-Gemisch ist; und/oder
c) wobei der Energiespeicher (5) ein Lithium-Ionen-Akkumulator-Energiespeicher und/oder ein Hochvolt-Energiespeicher ist.

11. Kraftfahrzeug, vorzugsweise Nutzfahrzeug, wie beispielsweise ein Lastkraftwagen oder Omnibus, umfassend eine Vorrichtung (1) nach einem der vorhergehenden Ansprüche.

12. Verfahren zur Temperierung eines Energiespeichers (5) für elektrische Energie eines Kraftfahrzeugs, wobei der Energiespeicher (5) mit einem Fluidkreislauf (3) zum Temperieren des Energiespeichers (5) thermisch koppelbar ist und/oder gekoppelt ist, wobei ein Temperierfluid durch den Fluidkreislauf zum Energiespeicher (5) zu- und abführbar ist und wobei der Fluidkreislauf (3) eine Pumpeneinrichtung (10,11) zum Transport des Temperierfluids durch den Fluidkreislauf (3), eine Ventileinrichtung (12), eine Kühleinrichtung (8) zur Kühlung des Temperierfluids und eine Heizeinrichtung (9) zur Erwärmung des Temperierfluids umfasst, wobei der Fluidkreislauf (3) einen Teilkreislauf (4) aufweist, in welchem die Heizeinrichtung (9) angeordnet ist;
wobei das Verfahren umfasst:
a) Überwachung einer vorbestimmten Heizbedingung bei abgestelltem Kraftfahrzeug; und
b) bei Erfüllung einer vorbestimmten Heizbedingung, Aktivierung eines Heizbetriebs der Heizeinrichtung (9), wobei mittels der Ventileinrichtung (12) eine fluidische Kopplung des Teilkreislaufs mit dem Fluidkreislauf und eine Zu- und Abfuhr von im Teilkreislauf erwärmten Temperierfluid zum Energiespeicher (5) für elektrische Energie gesteuert wird;
wobei bei aktiviertem Heizbetrieb in einem ersten Schritt (S3) eine vorbestimmte Teilmenge (20) des Temperierfluids im Teilkreislauf (4) durch die Heizeinrichtung (9) erwärmt wird, wobei der Teilkreislauf (4) mittels der Ventileinrichtung (12) fluidisch von dem restlichen Fluidkreislauf (3) und/oder dem Energiespeicher (5) getrennt ist und in einem zweiten Schritt (S4) der Teilkreislauf (4) mittels der Ventileinrichtung (12) fluidisch mit dem Energiespeicher (5) verbunden wird und mittels der Pumpeneinrichtung (10, 11) die erwärmte vorbestimmte Teilmenge (20) zum Energiespeicher gepumpt wird;
wobei
i) der Energiespeicher (5) über einen in einem Wandungsbereich, vorzugsweise in einer Bodenplatte, des Energiespeichers (5) ausgebildeten Durchströmungsbereich (6) mit dem Fluidkreislauf (3) thermisch gekoppelt ist, wobei die vorbestimmte Teilmenge (20) des Temperierfluids, die im ersten Schritt erwärmt wird, einer Aufnahmekapazität des Durchströmungsbereichs (6) des Energiespeichers entspricht, oder im Bereich von 80 % - 200 %, weiter vorzugsweise 90 % - 130 % der Aufnahmekapazität des Durchströmungsbereichs (6) liegt; und/oder
ii) im zweiten Schritt (S4) die Ventileinrichtung (12) und die Pumpeneinrichtung (10, 11) derart angesteuert wird, dass die erwärmte vorbestimmte Teilmenge (20) in den Durchströmungsbereich (9) gepumpt wird und dort durch Anhalten des Fluidstroms eine Mindestzeitdauer verbleibt.

## Claims

1. Device (1) for temperature control of an electric energy storage (5) of a motor vehicle, comprising
an electric energy storage device (5), preferably a high-voltage energy storage battery;
a fluid circuit (3) which can be thermally coupled and/or is coupled to the energy storage device (5) for tempering the energy storage device (5), wherein a tempering fluid can be supplied to and discharged from the energy storage device (5) through the fluid circuit;
wherein the fluid circuit (3) comprises a pump device (10, 11) for transporting the temperature control fluid through the fluid circuit (3), a valve device (12), a cooling device (8) for cooling the temperature control fluid and a heating device (9) for heating the temperature control fluid, wherein the fluid circuit (3) comprises a sub-circuit (4) in which the heating device (9) is arranged;
wherein the device (1) is configured to activate a heating operation of the heating device (9) when the motor vehicle is parked and when a predetermined heating condition is fulfilled, wherein a fluidic coupling of the partial circuit with the fluid circuit and a supply and discharge of temperature control fluid heated in the partial circuit to the electric energy storage (5) can be controlled by means of the valve device (12);
wherein the device (1) is configured such that, when heating mode is activated
in a first step (S3), to heat a predetermined partial quantity (20) of the temperature control fluid in the partial circuit (4) by the heating device (9), wherein the partial circuit (4) is fluidically separated from the remaining fluid circuit (3) and/or the energy storage device (5) by means of the valve device (12) and, in a second step (S4), the partial circuit (4) is fluidically connected to the energy storage device (5) by means of the valve device (12) and the heated predetermined partial quantity (20) is pumped to the energy storage device by means of the pump device (10, 11);
wherein
a) the energy storage (5) is thermally coupled to the fluid circuit (3) via a flow-through region (6) configured in a wall region, preferably in a base plate, of the energy storage (5), wherein the predetermined partial quantity (20) of the temperature control fluid which is heated in the first step corresponds to an absorption capacity of the flow-through region (6) of the energy storage, or is in the portion of 80 % - 200 %, further preferably 90 % - 130 % of the absorption capacity of the flow-through region (6); and/or
b) the device is configured to control the valve device (12) and the pump device (10, 11) in the second step (S4) in such a way that the heated predetermined partial quantity (20) is pumped into the flow area (9) and remains there for a minimum period of time by stopping the fluid flow.

2. Device (1) according to claim 1, wherein the device is configured to perform several sequences for heating the energy storage (9) when the heating mode is activated, wherein each sequence comprises the first (S3) and second (S4) step, preferably such that sequential pulses of heated partial quantities (20) of the temperature control fluid are pumped to the energy storage (9) instead of a continuous temperature control fluid flow.

3. Device according to one of the preceding claims, wherein the partial circuit (4) comprises a holding capacity for tempering fluid which is less than 50 %, further preferably less than 30 % or less than 20 % of the holding capacity of the fluid circuit (3).

4. Device (1) according to one of the preceding claims, comprising an electrical sub-board network (7) of the motor vehicle, which is supplied and/or can be supplied with electrical voltage when the ignition is switched off and/or the battery main switch of the motor vehicle is pulled, preferably via the energy storage (6), wherein the heating device (9) is an electrically operated heating device arranged in the electrical sub-board network (7).

5. Device (1) according to one of the preceding claims, wherein the fluid circuit (3) comprises two lines (14, 15) connected in parallel, in which the heating device (9) and the cooling device (8) are arranged fluidically parallel to one another, wherein it is controllable by means of the valve device (12) via which of the lines (14, 15) connected in parallel a fluid flow can be supplied and/or is supplied to the energy storage device (9).

6. Device (1) according to claim 5, wherein the device (1) is configured, in the second step (S4), to fluidically decouple a line section (14) comprising the cooling device (8) from a line section (16) comprising the energy storage (6) by means of the valve device (12).

7. Device (1) according to any one of the preceding claims, wherein the predetermined heating condition is fulfilled if a temperature of the energy storage falls below a predetermined threshold value.

8. Device (1) according to one of the preceding claims, wherein the pump device (10, 11) comprises a first pump (10) arranged in the subcircuit for conveying the temperature control fluid within the subcircuit (4) and/or a second pump (11) arranged outside the subcircuit for conveying temperature control fluid to the energy storage (9).

9. Device (1) according to claim 8, wherein the device is configured to deactivate the first pump (10) only after a run-on period following deactivation of the heating device, in order to avoid cavitation effects.

10. Device (1) according to any of the preceding claims,
a) wherein a thermal insulation (17) is provided on or adjacent to the heating device; and/or
b) wherein the temperature control fluid is a glycol-water mixture; and/or
c) wherein the energy storage device (5) is a lithium-ion accumulator energy storage device and/or a high-voltage energy storage device.

11. A motor vehicle, preferably a utility vehicle, such as a lorry or bus, comprising a device (1) according to one of the preceding claims.

12. Method for temperature control of an energy storage device (5) for electric energy of a motor vehicle, wherein the energy storage device (5) can be thermally coupled and/or is coupled to a fluid circuit (3) for temperature control of the energy storage device (5), wherein a temperature control fluid can be supplied to and discharged from the energy storage device (5) through the fluid circuit and wherein the fluid circuit (3) comprises a pump device (10,11) for transporting the temperature control fluid through the fluid circuit (3), a valve device (12), a cooling device (8) for cooling the temperature control fluid and a heating device (9) for heating the temperature control fluid, wherein the fluid circuit (3) comprises a subcircuit (4) in which the heating device (9) is arranged;
wherein the method comprises:
a) monitoring a predetermined heating condition when the vehicle is parked; and
b) upon fulfilment of a predetermined heating condition, activation of a heating operation of the heating device (9), wherein a fluidic coupling of the partial circuit with the fluid circuit and a supply and discharge of temperature control fluid heated in the partial circuit to the electric energy storage (5) is controlled by means of the valve device (12);
wherein a predetermined partial quantity (20) of the temperature control fluid in the partial circuit (4) is heated by the heating device (9) in a first step (S3) when heating mode is activated, wherein the partial circuit (4) is fluidically separated from the remaining fluid circuit (3) and/or the energy storage device (5) by means of the valve device (12) and in a second step (S4) the partial circuit (4) is fluidically connected to the energy storage device (5) by means of the valve device (12) and the heated predetermined partial quantity (20) is pumped to the energy storage device by means of the pump device (10, 11);
wherein
i the energy storage (5) is thermally coupled to the fluid circuit (3) via a flow-through region (6) configured in a wall region, preferably in a base plate, of the energy storage (5), wherein the predetermined partial quantity (20) of the temperature control fluid which is heated in the first step corresponds to an absorption capacity of the flow-through region (6) of the energy storage, or is in the portion of 80 % - 200 %, further preferably 90 % - 130 % of the absorption capacity of the flow-through region (6); and/or
ii) in the second step (S4), the valve device (12) and the pump device (10, 11) are actuated in such a way that the heated predetermined partial quantity (20) is pumped into the flow area (9) and remains there for a minimum period of time by stopping the fluid flow.

## Revendications

1. Dispositif (1) pour réguler la température d'un accumulateur d'énergie (5) pour l'énergie électrique d'un véhicule à moteur, comprenant
un accumulateur d'énergie (5) pour l'énergie électrique, de préférence une batterie haute tension ;
un circuit de fluide (3) qui est et/ou peut être couplé thermiquement à l'accumulateur d'énergie (5) afin de réguler la température de l'accumulateur d'énergie (5), un fluide de régulation de température pouvant être amené à l'accumulateur d'énergie (5) et évacué de celui-ci à travers le circuit de fluide ;
le circuit de fluide (3) comprenant un dispositif de pompage (10, 11) pour transporter le fluide de régulation de température à travers le circuit de fluide (3), un dispositif de vanne (12), un dispositif de refroidissement (8) pour refroidir le fluide de régulation de température et un dispositif de chauffage (9) pour chauffer le fluide de régulation de température, le circuit de fluide (3) comportant un sous-circuit (4) dans lequel le dispositif de chauffage (9) est agencé ;
le dispositif (1) étant conçu pour activer une opération de chauffage du dispositif de chauffage (9) lorsque le véhicule à moteur est à l'arrêt et qu'une condition de chauffage prédéterminée est satisfaite, un couplage fluidique du sous-circuit au circuit de fluide et une alimentation et une décharge d'un fluide de régulation de température chauffé dans le sous-circuit, vers et depuis l'accumulateur d'énergie (5) pour l'énergie électrique pouvant être commandés au moyen du dispositif de vanne (12) ;
le dispositif (1) étant conçu, lorsque l'opération de chauffage est activée,
lors d'une première étape (S3), pour chauffer une partie prédéterminée (20) du fluide de régulation de température dans le sous-circuit (4) au moyen du dispositif de chauffage (9), le sous-circuit (4) étant séparé fluidiquement du reste du circuit de fluide (3) et/ou de l'accumulateur d'énergie (5) au moyen du dispositif de vanne (12) et, lors d'une deuxième étape (S4), pour relier fluidiquement le sous-circuit (4) à l'accumulateur d'énergie (5) au moyen du dispositif de vanne (12) et pomper la partie prédéterminée chauffée (20) vers l'accumulateur d'énergie au moyen du dispositif de pompage (10, 11) ;
dans lequel
a) l'accumulateur d'énergie (5) est couplé thermiquement au circuit de fluide (3) par l'intermédiaire d'une zone de traversée (6) formée dans une zone de paroi, de préférence dans une plaque de base, de l'accumulateur d'énergie (5), la partie prédéterminée (20) du fluide de régulation de température, qui est chauffée lors de la première étape, correspondant à la capacité de réception de la zone de traversée (6) de l'accumulateur d'énergie, ou se situant dans la plage de 80 % à 200 %, de préférence de 90 % à 130 % de la capacité de réception de la zone de traversée (6) ; et/ou
b) le dispositif est conçu, lors de la deuxième étape (S4), pour commander le dispositif de vanne (12) et le dispositif de pompage (10, 11) de manière à ce que la partie prédéterminée chauffée (20) soit pompée dans la zone de traversée (9) et y reste pendant une durée minimale par arrêt de l'écoulement de fluide.

2. Dispositif (1) selon la revendication 1, dans lequel le dispositif est conçu, lorsque l'opération de chauffage est activée, pour effectuer plusieurs séquences de chauffage de l'accumulateur d'énergie (9), chaque séquence comprenant les première (S3) et deuxième (S4) étapes, de préférence de manière à ce que des impulsions séquentielles de parties chauffées (20) du fluide de régulation de température soient pompées vers l'accumulateur d'énergie (9) au lieu d'un écoulement continu de fluide de régulation de température.

3. Dispositif selon l'une quelconque des revendications précédentes, le sous-circuit (4) a une capacité de réception du fluide de régulation de température qui est inférieure à 50 %, et de préférence inférieure à 30 % ou inférieure à 20 % de la capacité de réception du circuit de fluide (3).

4. Dispositif (1) selon l'une quelconque des revendications précédentes, comprenant un sous-réseau de bord électrique (7) du véhicule à moteur, qui est alimenté ou peut être alimenté en tension électrique lorsque l'allumage est coupé et/ou que le commutateur principal de la batterie du véhicule à moteur est ouvert, de préférence par l'intermédiaire de l'accumulateur d'énergie (6), le dispositif de chauffage (9) étant un dispositif de chauffage électrique situé dans le sous-réseau de bord (7).

5. Dispositif (1) selon l'une quelconque des revendications précédentes, dans lequel le circuit de fluide (3) comporte deux conduites (14, 15) montées en parallèle, dans lesquelles le dispositif de chauffage (9) et le dispositif de refroidissement (8) sont disposés fluidiquement en parallèle l'un par rapport à l'autre, le dispositif de vanne (12) permettant de commander celle des conduites montées en parallèle (14, 15) par l'intermédiaire de laquelle un flux de fluide peut être amené et/ou est amené à l'accumulateur d'énergie (9).

6. Dispositif (1) selon la revendication 5, dans lequel le dispositif (1) est conçu, lors de la deuxième étape (S4), pour découpler fluidiquement, au moyen du dispositif de vanne (12), une section de conduite (14) qui comporte le dispositif de refroidissement (8), d'une section de conduite (16) qui comporte l'accumulateur d'énergie (6).

7. Dispositif (1) selon l'une quelconque des revendications précédentes, dans lequel la condition de chauffage prédéterminée est remplie dans le cas où une température de l'accumulateur d'énergie est inférieure à une valeur de seuil prédéterminée.

8. Dispositif (1) selon l'une quelconque des revendications précédentes, dans lequel le dispositif de pompage (10, 11) comprend une première pompe (10) disposée dans le sous-circuit pour transporter le fluide de régulation de température à l'intérieur du sous-circuit (4) et/ou une deuxième pompe (11) disposée à l'extérieur du sous-circuit pour transporter le fluide de régulation de température vers l'accumulateur d'énergie (9).

9. Dispositif (1) selon la revendication 8, dans lequel le dispositif est conçu, après une désactivation du dispositif de chauffage, pour désactiver la première pompe (10) afin d'éviter les effets de cavitation seulement après un temps de post-fonctionnement.

10. Dispositif (1) selon l'une quelconque des revendications précédentes,
a) dans lequel une isolation thermique (17) est prévue sur ou de manière adjacente au dispositif de chauffage ; et/ou
b) dans lequel le fluide de régulation de température est un mélange de glycol et d'eau ; et/ou
c) dans lequel l'accumulateur d'énergie (5) est un accumulateur d'énergie à batterie au lithium-ion et/ou un accumulateur d'énergie haute tension.

11. Véhicule à moteur, de préférence véhicule utilitaire, tel qu'un poids lourd ou un autobus, comprenant un dispositif (1) selon l'une quelconque des revendications précédentes.

12. Procédé pour réguler la température d'un accumulateur d'énergie (5) pour l'énergie électrique d'un véhicule à moteur, dans lequel l'accumulateur d'énergie (5) peut être et/ou est couplé thermiquement à un circuit de fluide (3) afin de réguler la température de l'accumulateur d'énergie (5), un fluide de régulation de température pouvant être amené à l'accumulateur d'énergie (5) et évacué de celui-ci par l'intermédiaire du circuit de fluide, et le circuit de fluide (3) comprenant un dispositif de pompage (10, 11) pour transporter le fluide de régulation de température à travers le circuit de fluide (3), un dispositif de vanne (12), un dispositif de refroidissement (8) pour refroidir le fluide de régulation de température et un dispositif de chauffage (9) pour chauffer le fluide de régulation de température, le circuit de fluide (3) comportant un sous-circuit (4) dans lequel le dispositif de chauffage (9) est agencé ; le procédé comprenant :
a) la surveillance d'une condition de chauffage prédéterminée lorsque le véhicule à moteur est à l'arrêt ; et
b) lorsque la condition de chauffage prédéterminée est remplie, l'activation d'une opération de chauffage du dispositif de chauffage (9), un couplage fluidique du sous-circuit au circuit de fluide et une alimentation et une décharge de fluide de régulation de température chauffé dans le sous-circuit vers l'accumulateur d'énergie (5) pour l'énergie électrique étant commandés au moyen du dispositif de vanne (12) ;
dans lequel, lorsque l'opération de chauffage est activée, lors d'une première étape (S3), une partie prédéterminée (20) du fluide de régulation de température dans le sous-circuit (4) est chauffée par le dispositif de chauffage (9), le sous-circuit (4) étant séparé fluidiquement du reste du circuit de fluide (3) et/ou de l'accumulateur d'énergie (5) au moyen du dispositif de vanne (12) et, lors d'une deuxième étape (S4), le sous-circuit (4) est relié fluidiquement à l'accumulateur d'énergie (5) au moyen du dispositif de vanne (12) et la partie prédéterminée chauffée (20) est pompée vers l'accumulateur d'énergie au moyen du dispositif de pompage (10, 11) ;
dans lequel
i) l'accumulateur d'énergie (5) est couplé thermiquement au circuit de fluide (3) par l'intermédiaire d'une zone de traversée (6) formée dans une zone de paroi, de préférence dans une plaque de base, de l'accumulateur d'énergie (5), la partie prédéterminée (20) du fluide de régulation de température, qui est chauffée lors de la première étape, correspondant à la capacité de réception de la zone de traversée (6) de l'accumulateur d'énergie, ou se situant dans la plage de 80 % à 200 %, de préférence de 90 % à 130 % de la capacité de réception de la zone de traversée (6) ; et/ou
ii) lors de la deuxième étape (S4), le dispositif de vanne (12) et le dispositif de pompage (10, 11) sont commandés de manière à ce que la partie prédéterminée chauffée (20) soit pompée dans la zone de traversée (9) et y reste pendant une durée minimale par arrêt de l'écoulement de fluide.
